# EUROPEAN PATENT SPECIFICATION

(11) **EP 1 866 870 B1**
(45) Date of publication and mention of the grant of the patent: **03.06.2009**
(21) Application number: 06728229.3
(22) Date of filing: 04.04.2006
(51) Int. Cl.: G06T 15/00

(54) **RENDERING 3D COMPUTER GRAPHICS USING 2D COMPUTER GRAPHICS CAPABILITIES**
WIEDERGABE VON 3D-COMPUTERGRAPHIK UNTER VERWENDUNG VON 2D-COMPUTERGRAPHIK-FÄHIGKEITEN
RENDU DE GRAPHIQUES INFORMATIQUES EN 3D AU MOYEN DE CAPACITES GRAPHIQUES INFORMATIQUES EN 2D

(30) Priority: 04.04.2005 US 667228 P
(43) Date of publication of application: 19.12.2007
(73) Proprietor: Revolver Ltd., 46733 Herzliya (IL)
(72) Inventor: FISCHER, Amir, 69361 Tel Aviv (IL); ELBER, Gershon, 34861 Haifa (IL)
(74) Representative: Cerbaro, Elena
(86) International application number: PCT/IL2006/000428
(87) International publication number: WO 2006/106512

(56) References cited:
- WO-A-20/04036504
- US-A1- 2002 070 932
- KIMURA K ET AL: "Independent lightweight 3D graphics for mobile phones" COMPUTER AND INFORMATION TECHNOLOGY, 2004. CIT '04. THE FOURTH INTERNATIONAL CONFERENCE ON WUHAN, CHINA 14-16 SEPT. 2004, PISCATAWAY, NJ, USA,IEEE, 14 September 2004 (2004-09-14), pages 562-567, XP010743097 ISBN: 0-7695-2216-5
- AKENINE-MOLLER T ET AL: "Graphics for the masses: a hardware rasterization architecture for mobile phones" ACM TRANSACTIONS ON GRAPHICS, ASSOCIATION FOR COMPUTING MACHINERY, NEW YORK, NY, US, vol. 22, no. 3, July 2003 (2003-07), pages 801-808, XP002311930 ISSN: 0730-0301

## Description

### Field of the Invention

The present invention relates to the field of three dimensional (3D) computer graphics. Specifically, this invention relates to the generation and/or display of 3D computer graphics, wherein any end-user can display the 3D images on his terminal device, e.g. personal computer, cellular phone etc.

### Background of the Invention

3D computer graphics is the art of using digital computers and specialized 3D software to create a collection of graphical objects that can be displayed on a suitable terminal. Document WO 2004/036504 (Nokia Corp.) discloses a method of preprocessing 3D graphics on a first device with a higher processing power and rendering animated 3D graphics on a second device with relatively low processing power. In the preprocessing stage triangle strips are generated such that hidden surfaces are removed and planes of symmetry are used to remove symmetrically corresponding points in order to further reduce the overall number of points, which have to be transferred to the second device. 3D computer graphics is different from 2D computer graphics in that a 3D representation of geometric data is stored in a computer for the purposes of performing calculations and executing instructions, required for rendering a collection of 2D images that are displayed and manipulated, such that a 3D illusion is obtained.

The conventional process of creating 3D computer graphics can be sequentially divided into five basic stages:
1. modeling
2. scene layout setup;
3. transformation;
4. hidden surface removal; and
5. shading and polygon(s) filling, e.g. by texture mapping.

The modeling stage can be described as shaping individual objects that are later used in the scene. Several modeling techniques are known in the art, including polygonal modeling (information related to polygonal modeling may be found for example at http://en.wi.kipedia.org/wiki/Polygonal modeling). Models can be created with a wide variety of commercial modeling tools, such as AutoCAD© and Solid Works©.

Polygons are simple primitives that virtually all rendering tools use as their basic primitives. Typically, polygons are approximated from other geometric representations such as spline (curved) surfaces. Then, the scenes are typically converted into polygons, usually triangles. As would be understood by those familiar with the art of 3D graphics, a group of polygons that are connected together by shared vertices is referred to as a mesh. The main advantage of polygonal representation is that it is more efficient than other types of graphic representations for rendering and picture making needs.

Once all objects are represented by polygons in the correct orientation (i.e., the orientation, in which the user will see the desired scene) they must be displayed on the computer screen. The human eye sees three dimensions, while the computer screen can display only two dimensions, therefore, the 3D model must be converted to one or more two-dimensional image. This is often done using projection, preferably perspective projection. The basic idea behind the perspective projection is similar to the way the human eye works. Once the image is projected onto the screen, the farther objects are smaller relative to those that are closer to the eye, thus an illussion of 3D is created.

The scene layout setup stage involves arranging virtual objects, light, shading and other entities on a scene which will later be used to produce a still image or an animation. Lighting is an important factor in a scene setup. As is the case in real-world scene arrangement, lighting is a significant contributing factor to the resulting aesthetic and visual quality of the final visual effect.

During the hidden surface removal stage, visibility analysis is applied in order to determine and display only the visible portions of the 3D image created. The visibility analysis is typically done using a Z-buffer, which is one solution to the problem (visibility problem) of deciding which elements of a scene are visible, and which are hidden (information related to Z-buffers may be found for example at http://en.wikipedia.org/wiki/Z-buffering). Practically, Z-buffering is the management of image depth coordinates in 3D graphics.

When an object is rendered by a 3D graphics card, the depth of a generated pixel (z coordinate) is stored in a buffer (the Z-buffer). This buffer is usually arranged as a two-dimensional array (x-y) with one element for each screen pixel. If another object of the scene must be rendered in the same pixel, the graphics card compares the two depth values and selects the one that is closest to the observer. The chosen depth value is then saved in the *Z*-buffer, replacing the previous one. In the end, the *Z*-buffer will allow the graphics card to correctly reproduce the usual depth perception: a closer object hides a farther one.

However, implementing the *Z*-buffer technique in software may deteriorate the inherent capabilities of the graphic tools installed on the computer. For example, a 2D graphics package may support very efficient drawing of 2D polygons, including fast fill and efficient texture mapping. By using a *Z-*buffer's software emulation, those capabilities may be substantially deteriorated or even lost.

The well-known Painter's Algorithm, which is one of the simplest solutions to the visibility problem in 3D computer graphics, may also be used for visibility analysis (information related to the Painter's algorithm may be found for example at http://en.wikipedia.org/wiki/Painter's _algorithm). The painter's algorithm sorts all of the polygons in a scene by their depth and then paints them in this order, starting from the farest polygon to the closest one. It will over-paint the parts that are normally not visible and thus solves the visibility problem.

Referring to two arbitrary polygons P and Q, the classical painter's algorithm (described, e.g., in "Computer Graphics: Principles and Practice", by Foley et al, Addison-Wesley, 1996), performs the visibility analysis according to the following tests:
a. Test if the two polygons' x-extents (the x values that are spanned by the polygons) do not overlap. If so, order is irrelevant.
b. Test if the two polygons' y-extents do not overlap. If so, order is irrelevant.
c. Test if P is entirely on one side of Q's plane (that is, P does not intersect Q). If so, order can be determined.
d. Test if Q is entirely on one side of P's plane (that is, Q does not intersect P). If so, order can be determined.
e. Test if the projections of P and Q onto the XY plane do not overlap. If so, order is irrelevant.

Once a partial order has been defined for each pair of polygons in the scene, an order of the entire set must be determined so that painting the set of polygons in that order will leave a proper 2D image of the scene with the hidden portions removed. Such an order could be extracted from the information over all the polygons' pairs using, for example, a graph searching method.

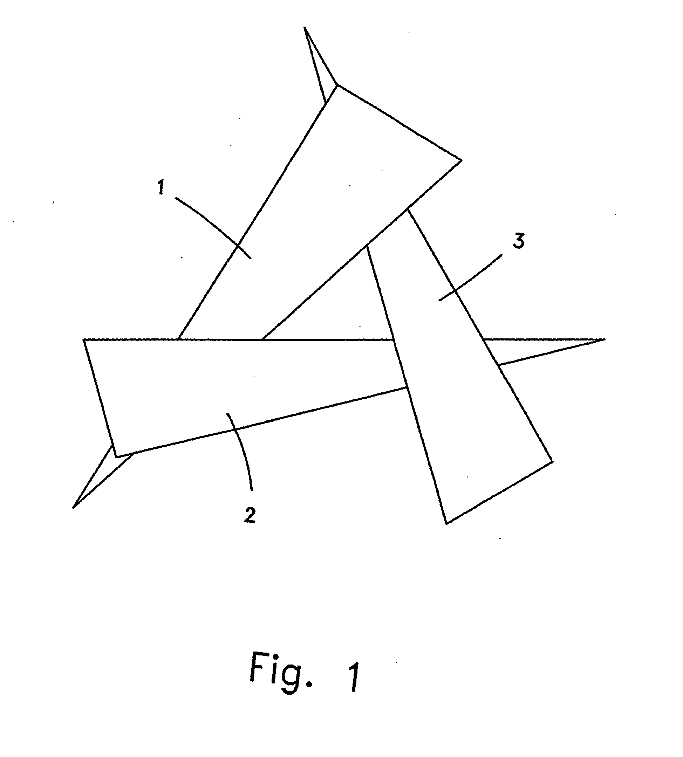

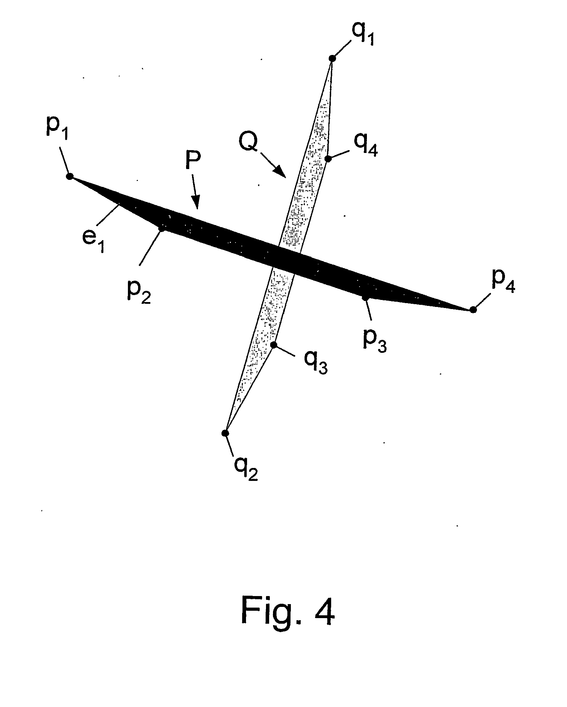

However, the painter's algorithm can fail in certain cases. Fig. 1 illustrates a situation where polygons 1, 2 and 3 overlap each other. Fig. 4 illustrates another similar situation, relating to polygons P and Q. In both cases, it is not possible to decide which polygon is closer than the others. In order to implement the painter's algorithm in such cases, the overlapping polygons must be divided in some way to sub-polygons, so that the order of the sub-polygons can be determined.

So far we have discussed the Painter's algorithm that solves the visibility problem for a set of polygons for a single direction of view. One extension of the painter's algorithm that attempts to resolve the visibility problems from all possible views is known in the art as Binary Space Partitioning (BSP) (information related to BSP may be found for example at http://en.wikipedia.org/wiki/Binary_space_partitioning). One of the disadvantages of the BSP method is that it requires the subdivision of many polygons, and therefore greatly increases the total number of polygons that need to be processed.

3D computer graphics has become more and more dominant in many computer related fields, including scientific simulations, animation movies, and computer games. Therefore, the need for improved 3D graphics hardware and software has been growing steadily.

Some modern computers comprise hardware and software capable of presenting and/or generating 3D graphics, however, this is not true for all computers that are currently widespread the market. In addition, many applications are inherently two dimensional, e.g., the commonly used Macromedia© Flash technology. Such 2D technologies do not support 3D transformation and 3D to 2D projection. For example, the rotation of an object, e.g., a cube, while watching it from all directions may require the conversion of 3D geometry to 2D geometry, a feature that is not available in 2D graphic software packages. In addition, 2D graphic software packages are unable to resolve the hidden surface removal problem.

Computer games tend to require 3D computer graphics, as well as many computer resources. This is true also for different 3D applications that are executed on other terminal devises, e.g., cellular phones.

One way to solve the problem presented hereinabove is to implement what is known in the art as "plug-ins". Plug-ins are software packages that are usually downloaded from the Internet in order to upgrade the capabilities of the computer. Once downloaded, the plug-ins automatically install themselves, so that users need no expertise to utilize them. However, downloading software packages from the Internet can put the computer's security at risk. Not all web sites are secure, and such downloads can infect the computer with various types of computer "viruses" and "worms".

It would therefore be highly desirable to allow any end-user to use and enjoy 3D graphics, for example in computer games, without the need to download plug-ins and without endangering the terminal device in any other manner.

It is an object of the present invention to provide a method by which any end-user can operate 3D computer graphics on any terminal device comprising conventional 2D graphic applications.

It is another object of the present invention to provide a method that remotely provides any end-user the capability to operate 3D computer graphics and animations, over the Internet.

It is yet another object of the present invention to provide a method that allows any end-user to operate 3D computer graphics without deteriorating his terminal device's security.

It is yet another object of the present invention to provide a method that allows any end-user to operate 3D computer graphics without overloading the data channel by which that user is connected to the internet.

It is a further object of the present invention to provide a method that allows any end-user operate 3D computer graphics using the existing data rate exchange of his terminal device.

It is yet a further object of the present invention to provide an efficient process for conducting visibility analysis.

Additional purposes and advantages of this invention will become apparent as the description proceeds.

### Summary of the Invention

The present invention is directed to a method for generating and displaying 3D graphic images on the display of a terminal device using 2D graphic environments, where every possible scene is modeled by one or more objects that can be represented by polygons using a suitable modeling method. The geometry of the polygons that correspond to each object is projected for any desired orientation of the objects, onto the plane of the display. For each object, curves connecting the projections of the vertices of its corresponding mesh of polygons in all different orientations of that object and consisting of a plurality of discrete points, is created, such that every point on each curve is stored according to its (*x,y*) position on the plane, and such that the resolution of each curve is determined according to the number of points. A visibility analysis is performed for every mesh that corresponds to a specific orientation, thereby determining the distance of the points from the viewer. Hidden polygons and/or edges or portions thereof are deleted and the geometry for all orientations is optimally encoded, e.g., by using a Minimum Spanning Tree. Then 3D graphic images are displayed in the 2D environments by using the encoded geometry for reconstructing a portion of, or all, the remaining polygons and filling the remaining polygons according to predefined rules. Filling may include texture mapping and/or painting.

The encoding stage may further include data related to the time (*t*) at which each point reaches a desired position.

Preferably, the visibility analysis is performed for the polygons by testing if the two polygons' *x*-extent does not overlap, if so, labeling the two polygons as polygons of which the display order is irrelevent; otherwise, testing if the two polygons' y-extent does not overlap, if so, labeling the two polygons as polygons of which the display order is irrelevent; otherwise, testing if the projections of both polygons onto the view plane do not overlap, if so, labeling the two polygons as polygons of which the display order is irrelevent; otherwise, testing if the first polygon is entirely on one side of the second polygon's plane, if so, determining the display order of the two polygons; otherwise, testing if the second polygon is entirely on one side of the first polygon's plane, if so, determining the display order of the two polygons; otherwise, testing to see if a separating plane between the two polygons exists, if so, determining the display order of the two polygons; otherwise, splitting polygons as necessary. These steps are repeated with the split polygons. The proper order between all polygons in the scene is found by performing a graph search over all results of the preceding steps of all possible pair of polygons, while splitting polygons as necessary. Then, the same steps are repeated for every pair of polygons in every orientation.

The visibility analysis may be performed for at least two convex polygons by: testing if the two convex polygons' x-extent does not overlap, if so, labeling the two polygons as polygons of which the display order is irrelevent; otherwise,
testing if the two convex polygons' *y*-extent does not overlap, if so, labeling the two convex polygons as polygons of which the display order is irrelevent; otherwise,
testing if the projections of both convex polygons onto the view plane do not overlap, if so, labeling the two convex polygons as polygons of which the display order is irrelevent; otherwise,
testing if the first convex polygon is entirely on one side of the second convex polygon's plane, if so, determining the display order of the two convex polygons; otherwise,
testing if the second convex polygon is entirely on one side of the first convex polygon's plane, if so, determining the display order of the two convex polygons; otherwise,
finding a separating plane between the two convex polygons and determining the display order of the two convex polygons;
finding the proper order between all convex polygons in the scene by performing a graph search over all the results of steps (a) to (f) of all possible pair of convex polygons, while splitting convex polygon as necessary,
wherein steps (a) to (f) are repeated for every pair of convex polygons in every orientation.

Preferably, the existence of a separating plane is tested according to the following steps:
a. defining plane L as a plane through edge eᵢ and (vertex)*ⱼ* wherein edges eᵢ are the edges connecting (vertex)*ᵢ* and (vertex)*ᵢ₊₁* of the first polygon and (vertex)*ⱼ* is a vertex of the second polygon;
b. checking if the first polygon is on one side of L and the second polygon is on the other side of L and as long as the result is negative;
c. repeating step (b) for all combinations between edges eᵢ and vertices (vertex)j until a separating plane is found; otherwise,
d. defining plane L as a plane through edge e*ⱼ* and (vertex)ᵢ wherein edges *eⱼ* are the edges connecting (vertex)*ⱼ* and (vertex)*ⱼ₊₁* of the second polygon and (vertex)*ᵢ* is a vertex of the first polygon;
e. checking if the first polygon is on one side of L and the second polygon is on the other side of L, and, as long as the result is negative;
f. repeating step (e) for all combinations between edges *eⱼ* and vertices (vertex)ᵢ until a separating plane is found or until all combinations have been checked.

The geometry may be encoded by using a minimum spanning tree, such that for any desired n different views, *n* ordered lists {Ti _{|*i = 1,...,n*} } of subsets of the polygonal mesh representing each view are generated. A click graph consisting of n nodes (Ni) being the *n* ordered lists T*i* and of edges E*ij* connecting node *i* to node *j* |_{*j* = *1*,...,n} is also generated. A weight that corresponds to the cost of the difference between any two nodes Ni and Nj is assigned for each edge E*ij* in the click graph and the Minimum Spanning Tree (MST) of the click graph is then generated. All of the ordered lists { T*i* } lists are represented by a selected order list T*k*, i.e., the root of the MST, and by all the selected edges with the lowest weight that are part of the MST, and leading from T*k* to all remaining ordered lists. T*k* and all the transitions represented by the selected edges are encoded into a data file, from which all *n* ordered lists T*i* can be reconstructed.

All the above and other characteristics and advantages of the invention will be further understood through the following illustrative and non-limitative description of preferred embodiments thereof.

### Brief Description of Drawings

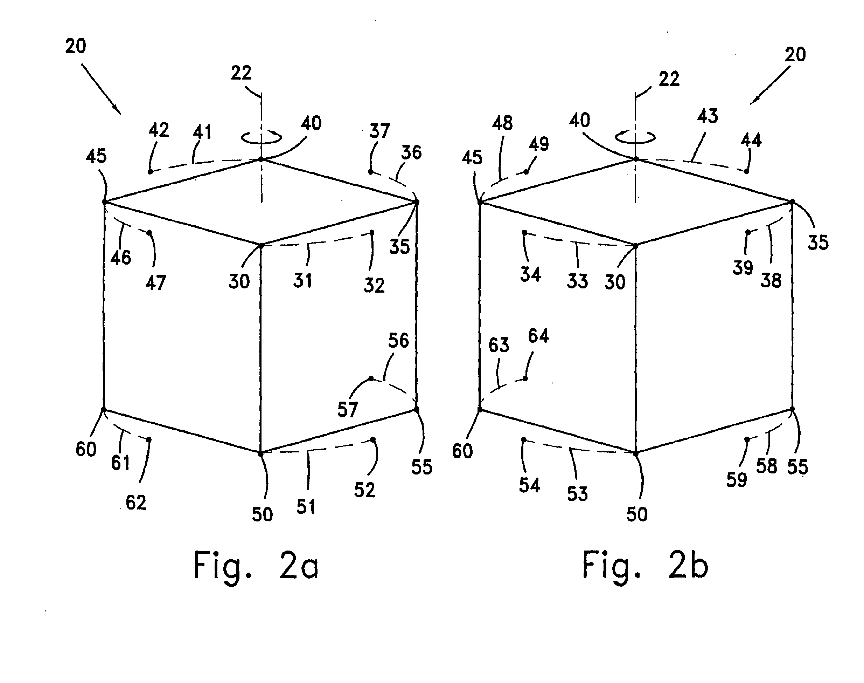

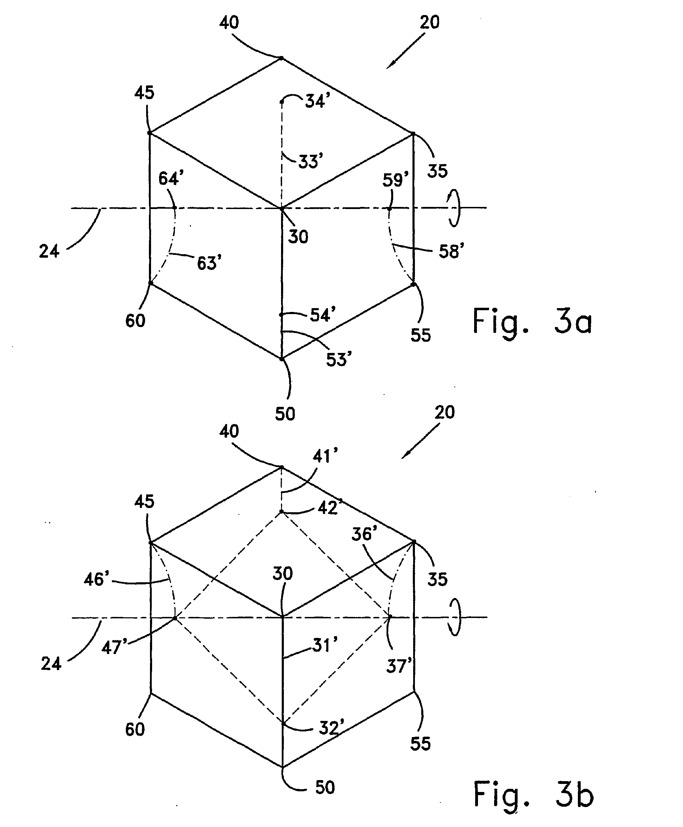

■ Fig. 1 schematically shows three overlapping polygons;
■ Figs. 2a, 2b, 3a and 3b schematically describe a rotating cube and the curves created from the motion of its vertices; and
■ Fig. 4 schematically describes two overlapping polygons in the 3D space.

### Detailed Description of Preferred Embodiments

In light of the drawbacks of the prior art, as described hereinabove, there is a need for an improved method by which users can be provided with 3D graphics, or with the capability to generate 3D graphics in an efficient manner in environments that only support 2D graphics.

In one embodiment of the present invention, a secure web site that offers 3D content, such as computer games and animations is provided. Any end-user, even one that possesses no 3D graphic packages, subscribed to the site can play the computer games offered while being connected to the site during playtime. Unlike the risks caused by downloading plug-ins, the website implemented in this embodiment of the present invention is secure, thus there is no security risk to the terminal device, e.g., computer or cellular phone, while the user is connected to the site.

In other embodiments of the present invention any user can be supplied with the ability to produce 3D computer graphics using the existing 2D graphic applications on his terminal device, even when he is not connected to the above-mentioned web site.

The 3D graphics used in the present invention are preferably generated in an offline preprocessing stage. According to the present invention, the images to be used in any 3D scene are modeled typically using polygonal meshes, as described hereinabove. Once the polygons are generated, they are projected onto the field of view, (i.e., the plane of the terminal device's screen). This projection is done for a discrete set of views of the objects of any scene throughout the presentation. By resolving the visibility question for a discrete set of views only, a more efficient scheme, with regard to the number of polygons splits that are necessary, is devised, in comparison to other methods, such as BSP.

In order to alleviate the difficulties stemming from the fact that only a discrete set of views is employed, changes in the position of the vertices of each polygon's, resulting from all sampled orientations are mapped into the display plane, and curves connecting the different positions of the same vertex are traced. The resolution of the changes, mapped on those curves, depends on the number of orientations sampled when producing them. Since the curves are generated by the movement of the vertices in time, in one embodiment of the present invention each point of every curve can be stored in a matrix according to its position *(x,y)* and optionally to time (t). That is, the memory of the terminal device contains information relating to the positions of all objects in any scene, in addition to their rate of motion. In other embodiments, only the *(x,y)* positions are stored in the terminal device 's memory. In those embodiments, the time value is defined by other predefined rules of the game, and/or by actions of the end-user.

An example of such curves is described in Figs. 2a, 2b, 3a and 3b. All of those figures describe a cube (20) which rotates. In Fig. 2a cube (20) is described as rotating 45 degrees counterclockwise around a vertical axis (22). Looking for example at the vertex in position (30) in Fig. 2a it can be seen that when cube (20) rotates 45 degrees around axis (22) the vertex at position (30) moves along curve (31), and reaches position (32). In the same manner, the vertices at positions (35), (40), (45), (50), (55), and (60) move along curves (36), (41), (46), (51), (56), and (61) to their new positions (37), (42), (47), (52), (57), and (62), respectively.

When cube (20) rotates 45 degrees clockwise along axis (22), as seen in Fig. 2b, the vertex at position (30) moves along curve (33) and reaches position (34). In the same manner, the vertices at positions (35), (40), (45), (50), (55), and (60) move along curves (38), (43), (48), (53), (58), and (63) to their new positions (39), (44), (49), (54), (59), and (64), respectively.

Figs. 3a and 3b describes the same type of rotational motion, though in these figures cube (20) rotates along a horizontal axis (24). When rotating 135 degrees away from the viewer, as described in Fig. 3a, the vertex at position (30), for example, moves along curve (33') until it reaches position (34'). In the same manner, vertices (50), (55), and (60) move along curves (53'), (58') and (63') to their new positions (54'), (59') and (64'), respectively. The vertices at positions (35), (40), and (45) move to positions directly under positions (54'), (59') and (64'), therefore, their movement is not shown in the drawing.

In Fig. 3b cube (20) is described as rotating 45 degrees towards the viewer along horizontal axis (24). As can be seen in Fig. 3b, the vertex at position (30), for example, moves along curve (31') until it reaches position (32'). In the same manner, vertices (35), (40), and (45) move along curves (36'), (41') and (46') to their new positions (37'), (42') and (47'), respectively. The vertices at positions (50), (55), and (60) move to positions directly under positions (37'), (42') and (47'), therefore, their movement is not shown in the drawing.

It should be understood that the number of states, i.e., positions generated and stored in memory during preprocessing, is finite. However, once the user is supplied with the discrete *(x,y)* (and possible *(t))* values, his terminal device can simply calculate any desired intermediate state, for example by interpolation or extrapolation.

Once the above-mentioned curves are generated, a visibility analysis is conducted for every (x,y) point, e.g., positions (30) and (32) as shown in Fig. 2a. If the time *(t)* was stored in memory as well as the (x,y) position, the visual analysis will be conducted for every point *(x,y)* at every time *(t).* In a preferred embodiment of the present invention, the depth analysis is conducted using a unique modification of the painter's algorithm that almost eliminates the need for polygon divisions.

Fig. 4 shows polygons P and Q from the +Z direction wherein both polygons are almost vertical. When examining polygons P and Q according to the five tests of the classical painter's algorithm described hereinabove, it becomes apparent that all five tests will fail. Polygons P and Q overlap both in their x-extent (i.e., the x-domain that polygon P spans intersects with the x-domain that polygon Q spans) and in their y-extent, therefore, tests 1 and 2 fail. In addition, since both polygons are nearly vertical, the plane of P intersects Q, and vice versa, thus, tests 3 and 4 fail, as well. Finally, test 5 will fail since, as is seen clearly in Fig. 4, the projections of polygons P and Q onto the *XY* plane overlap. Since all five tests have failed, it is necessary, when using the classical painter's algorithm, to divide one of the polygons into sub-polygons so that a partial order can be determined. Only then will it be possible to arrange the polygons according to their distance from the viewer (depth value). However, it would be highly desirable to minimize the number of polygon divisions, thereby minimizing the computer resources necessary for the visibility analysis process.

In a preferred embodiment of the present invention, the number of polygon splits is minimized by adding a sixth test to the five existing tests of the classical painter's algorithm. The sixth test of the present invention checks whether a separation plane L exists, such that P is located on one side of L, and Q is located on the other. As would be understood by those familiar with the art, if such a plane exists, the determination of the order of the polygons along the Z axis becomes trivial. The search process for plane L is conducted according to the following steps:
1. Define the edges eᵢ of polygon P as the lines connecting vertices *pᵢ* and *pi+1* of the same polygon. For Example, as shown in Fig. 4, *e₁* is the edge connecting *p₁* and *p₂.*
2. Define L as a plane passing through edge eᵢ of P and vertex *qⱼ*, which is one of the vertices of polygon Q.
3. Check if P is on one side of L, and Q is on the other side. If so, the order of the polygons is determined, if not, step 2 should be repeated for all combinations between edges *eᵢ* and vertices *qⱼ*.
4. If none of the L planes generated separates P and Q completely, define *eⱼ* as the edges of polygon Q, and repeat step 2-3 for edges *eⱼ* and vertices *pi* of P until either a separating plane has been found, or all of the combinations of edges and vertices have been checked.

As would be understood by those familiar with the art, not every pair of polygons has a separating plane. However, it is possible to prove that every pair of non-intersecting convex polygons does have a separating plane. Let M be such a separating plane that in any case does not intersect polygons P or Q. Move M along its normal line until it touches one of the vertices of either polygon, i.e. *pi,* or *qⱼ.* That vertex is referred to herein as *v₁.* Fix M touching vertex *v₁* and rotate it around that point using the remaining two degrees of freedom. Continue to rotate M until it touches another vertex, say *v₂,* on either polygon. Rotate M further until it touches a third vertex on either polygon, denoted *v₃.* Two of the three vertices that M now touches, i.e., *v₁,v₂,v₃,* must be adjacent due to the convexity of the two polygons. Thus, since M passes along the edge of one polygon, and touches a vertex of the other, the above procedure that tests all edges of one polygons with a vertex of the other (and vice versa) is guaranteed to find this (transformed) M, as a separating plane.

In the preferred embodiment of the present invention, the order of the tests of the classical painter's algorithm is changed. Since if any of tests 1, 2 and 5, as described hereinabove, succeed, the order of the polygons is irrelevant, in the preferred embodiment of the present invention, tests 1, 2 and 5 are performed first. Only if they all fail, tests 3 and 4, as described hereinabove, are conducted. When all 5 tests fail, the sixth test (seeking a separating plane) described hereinabove, is conducted. If all the polygons in the scene are convex and intersection-free, these 6 tests between pairs of polygons are guaranteed to succeed. In other cases (e.g. with non convex polygons), where all six tests fail, polygons will be split as described hereinabove. The tests are then performed recursively in the same manner for the split polygons. As stated above, having a determined order between each pairs of polygons could be used by those familiar with the art, via a graph search, to find a proper order of all the visible polygons so that the Painter's algorithm will produce the correct image. It should be noted that even for convex polygons, such an order might entail the need for polygon splits (See Figure 1 for one such example).

The order of the polygons and their pattern of concealment in each scene are saved in a relatively small file. Assuming that we sample n different views (that correspond to *n* different orientations), each marked by V_{i,}, wherein i=1,2,...,*n*. Each such view is encoded using a certain ordered subset of the polygons in the mesh. Any polygon that is found completely hidden in view Vᵢ is deleted from the list of polygons in that view. When considering two neighboring views, it is expected that the ordered lists of polygons in those two views will be almost similar. When switching from one view to the other, some polygons will be deleted, others will be inserted and some will change their order with regard to their distance from the viewer. Hence, we encode the n different views by taking full advantage of this spatial coherence.

Given n views with n ordered lists marked { Ti _{|*i =1,...,n*} }, of subsets of the polygonal mesh, compute the cost of the difference between any two lists, Ti and T*j* _{|}*ⱼ = _{1,...,n}* (i.e., the amount of space required to encode that difference). This difference includes deletion of (hidden) polygons no longer in the new list, insertion of new polygons and swapping the orders of some polygons. Now build a click graph (a graph with edges from every node to every other node) whose nodes are the ordered lists {T*i*}, and whose edges {E*ij*}, where E*ij* is the edge from node *i* to node *j*. Edges { E*ij* } have corresponding weights as the delete/insert/swap encoding costs of the transition between T*i* and T*j* (the weight of delete and insert operations is smaller than the weight of swapping, since swapping requires encoding of changes in two indexes, i and *j* while delete and insert operations require encoding of changes in one index only). Then, build the Minimum Spanning Tree (MST) of this graph (information related to Minimum Spanning Tree may be found, for example, at http://en.wikipedia.org/wiki/Minimum_spanning_tree). The MST representation is the optimal representation of all { T*i* } lists that are encoded into the file.

The decoder will open this MST tree and open all the { T*i* } lists, as part of its initialization stage. Then, once a desired view orientation, Vi, is selected by some interaction with the viewer, the different polygons, as listed in T*i*, are painted in the proper order while colors and lighting is set according to predefined shading rules, such as cosine shading, using any available 2D graphic tools.

As would be understood by those familiar with the art, the description of the different scenes of any application using the above-mentioned curves allows for smooth transitions between adjacent views using 2D graphics. Such a continuous transformation is also related to in the art as metamorphosis.

Linear planar metamorphosis is highly desirable since it can be handled easily by most 2D graphics terminal devices, such as Macromedia's Flash©. Furthermore, 2D graphics generally require far fewer computer resources than 3D graphics do. In essence, all needed information is saved during the preprocessing procedure in small size files.

Another advantage to the method of the present invention is that all of the above is done during a preprocessing procedure that is made offline, so that even if in some cases it may be time consuming, it is only conducted once. In this way, while users play online, all of the graphics should be generated at high speed, using few computer resources. Practically, the data that is generated and stored for a finite number of discrete orientations allows the end-user to generate an infinite number of new orientations, while using the existing interactive tools of the conventional 2D graphic application already installed.

Although embodiments of the present invention have been described by way of illustration, it will be understood that the invention may be carried out with variations, modifications, and adaptations, within the scope of the claims.

## Claims

1. A method for generating and displaying 3D graphic images on the display of a terminal device using 2D graphic environments, comprising the steps of:
a. modeling every possible scene by one or more objects that can be represented by polygons using a suitable modeling method;
b. for any desired orientation of said objects, projecting the geometry of the polygons that correspond to each object onto the plane of said display;
c. for each object creating curves connecting the projections of the vertices of its corresponding mesh of polygons in all different orientations of that object and consisting of a plurality of discrete points, wherein every point on each curve is stored according to its (x,y) position on said plane, such that the resolution of each curve is determined according to the number of points;
d. for every mesh that corresponds to a specific orientation, performing a visibility analysis for thereby determining the distance of said points from the viewer;
e. deleting hidden polygons and/or edges or portions thereof;
f. optimally encoding the geometry for all orientations; and
g. displaying 3D graphic images in said 2D environments by using the encoded geometry for reconstructing at least a portion of the remaining polygons and filling said remaining polygons according to predefined rules.

2. A method according to claim 1 wherein the filling comprises texture mapping and/or painting.

3. A method according to claim 1 wherein the geometry is encoded by using a minimum spanning tree.

4. The method of claim 1 wherein the encoding stage further eomprises data related to the time (t) at which each point reaches a desired position.

5. The method of claim 1 wherein the visibility analysis is performed for the polygons, according to the following steps:
a. testing if said two polygons' x-extent does not overlap, if so, labeling said two polygons as polygons of which the display order is irrelevent; otherwise,
b. testing if said two polygons' y-extent does not overlap, if so, labeling said two polygons as polygons of which the display order is irrelevent; otherwise,
c. testing if the projections of both polygons onto the view plane do not overlap, if so, labeling said two polygons as polygons of which the display order is irrelevent; otherwise,
d. testing if the first polygon is entirely on one side of the second polygon's plane, if so, determining the display order of said two polygons; otherwise,
e. testing if the second polygon is entirely on one side of the first polygon's plane, if so, determining the display order of said two polygons; otherwise,
f. testing to see if a separating plane between said two polygons exists, if so, determining the display order of said two polygons; otherwise,
g. splitting polygons as necessary;
h. repeating steps (a) to (g) with the split polygons; and
i. finding the proper order between all polygons in the scene by performing a graph search over all results of (a) to (h) of all possible pair of polygons, , while splitting polygons as necessary,
wherein steps (a) to (h) are repeated for every pair of polygons in every orientation.

6. The method of claim 1 wherein the visibility analysis is performed for at least two convex polygons according to the following steps:
a. testing if said two convex polygons' x-extent does not overlap, if so, labeling said two polygons as polygons of which the display order is irrelevent; otherwise,
b. testing if said two convex polygons' y-extent does not overlap, if so, labeling said two convex polygons as polygons of which the display order is irrelevent; otherwise,
c. testing if the projections of both convex polygons onto the view plane do not overlap, if so, labeling said two convex polygons as polygons of which the display order is irrelevent; otherwise,
d. testing if the first convex polygon is entirely on one side of the second convex polygon's plane, if so, determining the display order of said two convex polygons; otherwise,
e. testing if the second convex polygon is entirely on one side of the first convex polygon's plane, if so, determining the display order of said two convex polygons; otherwise,
f. finding a separating plane between said two convex polygons and determining the display order of said two convex polygons;
g. finding the proper order between all convex polygons in the scene by performing a graph search over all the results of steps (a) to (f) of all possible pair of convex polygons, while splitting convex polygon as necessary,
wherein steps (a) to (f) are repeated for every pair of convex polygons in every orientation.

7. The method of claim 5 wherein the existence of a separating plane is tested according to the following steps:
a. defining plane L as a plane through edge eᵢ and (vertex)*ⱼ* wherein edges eᵢ are the edges connecting (vertex)*ᵢ* and (vertex)*ᵢ₊₁* of the first polygon and (vertex)*ⱼ* is a vertex of the second polygon;
b. checking if said first polygon is on one side of L and said second polygon is on the other side of L and as long as the result is negative;
c. repeating step (b) for all combinations between edges eᵢ and vertices (vertex)ⱼ until a separating plane is found; otherwise,
d. defining plane L as a plane through edge *eⱼ* and (vertex)ᵢ wherein edges *eⱼ* are the edges connecting (vertex)*j* and (vertex)*ⱼ₊₁* of said second polygon and (vertex)*ᵢ* is a vertex of said first polygon;
e. checking if said first polygon is on one side of L and said second polygon is on the other side of L, and, as long as the result is negative;
f. repeating step (e) for all combinations between edges *eⱼ* and vertices (vertex)*ᵢ* until a separating plane is found or until all combinations have been checked.

8. A method according to claim 3, comprising:
a. for any desired *n* different views, generating *n* ordered lists { T*i* _{li= *1,...,n*}} of subsets of the polygonal mesh representing each view;
b. generating a click graph consisting of n nodes (Ni) being said n ordered lists T*i* and of edges E*ij* connecting node *i* to node *j* _{|*j*= *1,...,n*};
c. for each edge E*ij* in said click graph assigning a weight that corresponds to the cost of the difference between any two nodes N*i* and Nj;
d. generating the Minimum Spanning Tree (MST) of said click graph;
e. representing all of said ordered lists { T*i* } lists by a selected order list T*k*, being the root of said MST, and by all the selected edges having the lowest weight, being part of said MST, and leading from T*k* to all remaining ordered lists; and
f. encoding said T*k* and all the transitions represented by said selected edges into a data file, from which all *n* ordered lists T*i* can be reconstructed.

## Patentansprüche

1. Verfahren zum Erzeugen und Anzeigen von 3D-Grafik-Bildern auf dem Display eines Endgeräts unter Verwendung von 2D-Grafik-Umgebungen, welches folgende Schritte aufweist:
a.) Modellieren von jeder möglichen Szene durch ein oder mehrere Objekte, welche durch Polygone dargestellt werden können, unter Verwendung von einem geeigneten Modellierungsverfahren;
b.) Projizieren, für eine beliebige gewünschte Orientierung von den Objekten, der Geometrie von den Polygonen, welche jedem Objekt entsprechen, auf die Ebene des Displays;
c.) Erzeugen, für jedes Objekt, von Kurvenverläufen, welche die Projektionen von den Eckpunkten von seinem entsprechenden Netz von Polygonen in allen unterschiedlichen Orientierungen dieses Objekts verbinden und aus einer Vielzahl von diskreten Punkten bestehen, wobei jeder Punkt auf jedem Kurvenverlauf gemäß seiner (x, y)-Position in der Ebene gespeichert wird, so daß die Auflösung von jedem Kurvenverlauf gemäß der Anzahl von Punkten bestimmt wird;
d.) Durchführen von einer Sichtbarkeitsanalyse für jedes Netz, welches einer spezifischen Orientierung entspricht, um **dadurch** die Distanz von diesen Punkten zu dem Betrachter zu bestimmen;
e.) Löschen von versteckten Polygonen und/oder Kanten oder Teilen davon;
f.) Optimales Codieren der Geometrie für alle Orientierungen; und
g.) Anzeigen von 3D-Grafik-Bildern in den 2D-Umgebungen unter Verwendung der codierten Geometrie zur Rekonstruktion von zumindest einem Teil der verbleibenden Polygone und Auffüllen der verbleibenden Polygone gemäß vorbestimmten Regeln.

2. Verfahren nach Anspruch 1,
wobei das Auffüllen eine Texturabbildung und/oder eine Ausmalung enthält.

3. Verfahren nach Anspruch 1,
wobei die Geometrie unter Verwendung von einem minimalen aufspannenden Baum codiert wird.

4. Verfahren nach Anspruch 1,
wobei die Codierungsstufe ferner Daten bezogen auf die Zeit (t) enthält, bei welcher jeder Punkt eine gewünschte Position erreicht.

5. Verfahren nach Anspruch 1,
wobei die Sichtbarkeitsanalyse für die Polygone gemäß den folgenden Schritten durchgeführt wird:
a.) Überprüfen, ob sich die x-Umfänge der zwei Polygone nicht überlappen, und, wenn dies der Fall ist, Kennzeichnen der zwei Polygone als solche Polygone, bei welchen die Anzeigereihenfolge irrelevant ist; andererseits
b.) Überprüfen, ob sich die y-Umfänge der zwei Polygone nicht überlappen, und, wenn dies der Fall ist, Kennzeichnen der zwei Polygone als solche Polygone, bei welchen die Anzeigereihenfolge irrelevant ist; andererseits
c.) Überprüfen, ob sich die Projektionen von beiden Polygonen auf die Betrachtungsebene nicht überlappen, und, wenn dies der Fall ist, Kennzeichnen der zwei Polygone als solche Polygone, bei welchen die Anzeigereihenfolge irrelevant ist; andererseits
d.) Überprüfen, ob das erste Polygon vollständig auf der einen Seite von der Ebene des zweiten Polygons liegt, und, wenn dies der Fall ist, Bestimmen der Anzeigereihenfolge von den zwei Polygonen; andererseits
e.) Überprüfen, ob das zweite Polygon vollständig auf der einen Seite von der Ebene des ersten Polygons liegt, und, wenn dies der Fall ist, Bestimmen der Anzeigereihenfolge von den zwei Polygonen; andererseits
f.) Überprüfen, um zu erkennen, ob eine Trennungsebene zwischen den zwei Polygonen vorliegt, und, wenn dies der Fall ist, Bestimmen der Anzeigereihenfolge von den zwei Polygonen; andererseits
g.) Aufspalten von Polygonen, falls notwendig;
h.) Wiederholen der Schritte (a) bis (g) mit den aufgespalteten Polygonen, und
i.) Auffinden von der korrekten Reihenfolge zwischen allen Polygonen in der Szene durch das Durchführen von einer Grafiksuche über sämtliche Ergebnisse von (a) bis (h) von allen möglichen Paaren von Polygonen, während Polygone, falls notwendig, aufgespaltet werden,
wobei die Schritte (a) bis (h) für jedes Paar von Polygonen in jeder Orientierung wiederholt werden.

6. Verfahren nach Anspruch 1,
wobei die Sichtbarkeitsanalyse für mindestens zwei konvexe Polygone gemäß den folgenden Schritten durchgeführt wird:
a.) Überprüfen, ob sich die x-Umfänge der zwei konvexen Polygone nicht überlappen, und, wenn dies der Fall ist, Kennzeichnen der zwei konvexen Polygone als solche Polygone, bei welchen die Anzeigereihenfolge irrelevant ist; andererseits
b.) Überprüfen, ob sich die y-Umfänge der zwei konvexen Polygone nicht überlappen, und, wenn dies der Fall ist, Kennzeichnen der zwei Polygone als solche Polygone, bei welchen die Anzeigereihenfolge irrelevant ist; andererseits
c.) Überprüfen, ob sich die Projektionen von beiden konvexen Polygonen auf die Betrachtungsebene nicht überlappen, und, wenn dies der Fall ist, Kennzeichnen der zwei konvexen Polygone als solche Polygone, bei welchen die Anzeigereihenfolge irrelevant ist; andererseits
d.) Überprüfen, ob das erste konvexe Polygon vollständig auf der einen Seite von der Ebene des zweiten konvexen Polygons liegt, und, wenn dies der Fall ist, Bestimmen der Anzeigereihenfolge von den zwei konvexen Polygonen; andererseits
e.) Überprüfen, ob das zweite konvexe Polygon vollständig auf der einen Seite von der Ebene des ersten konvexen Polygons liegt, und, wenn dies der Fall ist, Bestimmen der Anzeigereihenfolge von den zwei konvexen Polygonen; andererseits
f.) Auffinden von einer Trennungsebene zwischen den zwei konvexen Polygonen und Bestimmen der Anzeigereihenfolge von den zwei konvexen Polygonen;
g.) Auffinden der korrekten Reihenfolge zwischen allen konvexen Polygonen in der Szene durch ein Durchführen von einer Grafiksuche über alle Ergebnisse von (a) bis (f) von allen möglichen Paaren von konvexen Polygonen, während ein konvexes Polygon, falls notwendig, aufgespaltet wird,
wobei die Schritte (a) bis (f) für jedes Paar von konvexen Polygonen in jeder Orientierung wiederholt werden.

7. Verfahren nach Anspruch 5,
wobei das Vorliegen von einer Trennungsebene gemäß den folgenden Schritten überprüft wird:
a.) Bestimmen einer Ebene L als eine Ebene durch eine Kante eᵢ und einen (Eckpunkt)ⱼ, wobei die Kanten eᵢ diejenigen Kanten sind, welche einen (Eckpunkt)ᵢ und einen (Eckpunkt)ᵢ₊₁ von dem ersten Polygon verbinden, und wobei ein (Eckpunkt)ⱼ ein Eckpunkt von dem zweiten Polygon ist;
b.) Überprüfen, ob das erste Polygon auf der einen Seite von L liegt und ob das zweite Polygon auf der anderen Seite von L liegt, und, solange das Ergebnis negativ ist;
c.) Wiederholen des Schritts (b) für alle Kombinationen zwischen Kanten eᵢ und Eckpunkten (Eckpunkt)ⱼ, bis eine Trennungsebene gefunden worden ist; andererseits
d.) Bestimmen einer Ebene L als eine Ebene durch eine Kante eⱼ und einen (Eckpunkt)ᵢ, wobei die Kanten eⱼ diejenigen Kanten sind, welche einen (Eckpunkt)ⱼ und einen (Eckpunkt)ⱼ₊₁ von dem zweiten Polygon verbinden, und wobei ein (Eckpunkt)ᵢ ein Eckpunkt von dem ersten Polygon ist,
e.) Überprüfen, ob das erste Polygon auf der einen Seite von L liegt und ob das zweite Polygon auf der anderen Seite von L liegt, und, solange das Ergebnis negativ ist;
f.) Wiederholen des Schritts (e) für alle Kombinationen zwischen Kanten eⱼ und Eckpunkten (Eckpunkt)ᵢ, bis eine Trennungsebene gefunden worden ist oder bis alle Kombinationen überprüft worden sind.

8. Verfahren nach Anspruch 3,
welches folgendes aufweist:
a.) Erzeugen, für beliebige gewünschte n unterschiedliche Ansichten, von n Ordnungslisten {Ti _{|i=1,...,n}} von Teilmengen von dem Polygonnetz, welche jede Ansicht repräsentieren,
b.) Erzeugen von einem Click-Graphen, der aus n Knoten (Ni), welche die n Ordnungslisten Ti sind, und Kanten Eij besteht, welche die Knoten i bis Knoten j _{|j=1,...,n} verbinden;
c.) Zuweisen, für jede Kante Eij in dem Click-Graphen, von einer Gewichtung, welche der Kostendifferenz zwischen jeweiligen zwei Knoten Ni und Nj entspricht,
d.) Erzeugen des minimalen aufspannenden Baums (MST) von dem Click-Graphen,
e.) Repräsentieren von sämtlichen Ordnungslisten {Ti} durch eine ausgewählte Ordnungsliste Tk, welche die Wurzel von dem aufspannenden Baum MST ist, und durch alle ausgewählten Kanten, welche die geringste Gewichtung haben, welche Teil von dem aufspannenden Baum MST sind und von Tk aus zu allen verbleibenden Ordnungslisten führen, und
f.) Codieren von Tk und sämtlichen Übergängen, welche durch die ausgewählten Kanten repräsentiert werden, in eine Datendatei, aus welcher alle n Ordnungslisten Ti rekonstruiert werden können.

## Revendications

1. Procédé permettant de générer et d'afficher des images graphiques 3D sur l'écran d'un dispositif terminal à l'aide d'environnements graphiques 2D, comprenant les étapes consistant à :
a. modéliser chaque scène possible par un ou plusieurs objets qui peuvent être représentés par des polygones à l'aide d'un procédé de modélisation approprié ;
b. pour toute orientation souhaitée desdits objets, projeter la géométrie des polygones qui correspondent à chaque objet sur le plan dudit écran ;
c. pour chaque objet, créer des courbes reliant les projections des sommets de son réseau correspondant de polygones dans toutes les différentes orientations de cet objet et constituées d'une pluralité de points discrets, où chaque point sur chaque courbe est stocké selon sa position *(x, y)* sur ledit plan, de telle sorte que la résolution de chaque courbe est déterminée en fonction du nombre de points ;
d. pour chaque réseau qui correspond à une orientation spécifique, effectuer une analyse de visibilité pour ainsi déterminer la distance desdits points à partir de la visionneuse;
e. supprimer les polygones cachés et/ou les bords ou parties de ces derniers ;
f. coder de façon optimale la géométrie pour toutes les orientations ; et
g. afficher des images graphiques 3D dans lesdits environnements 2D à l'aide de la géométrie codée pour reconstruire au moins une partie des polygones restants et remplir lesdits polygones restants selon des règles prédéfinies.

2. Procédé selon la revendication 1, dans lequel l'étape de remplissage comprend le placage de texture et/ou la peinture.

3. Procédé selon la revendication 1, dans lequel la géométrie est codée à l'aide d'un arbre recouvrant minimum.

4. Procédé selon la revendication 1, dans lequel l'étape de codage comprend en outre des données liées à l'instant *(t)* auquel chaque point atteint une position souhaitée.

5. Procédé selon la revendication 1, dans lequel l'analyse de visibilité est effectuée pour les polygones, conformément aux étapes suivantes consistant à :
a. vérifier que les axes x desdits deux polygones ne se chevauchent pas, si tel est le cas, marquer lesdits deux polygones comme étant des polygones dont l'ordre d'affichage est hors de propos ; sinon,
b. vérifier que les axes *y* desdits deux polygones ne se chevauchent pas, si tel est le cas, marquer lesdits deux polygones comme étant des polygones dont l'ordre d'affichage est hors de propos ; sinon,
c. vérifier que les projections des deux polygones sur le plan de vue ne se chevauchent pas, si tel est le cas, marquer lesdits deux polygones comme étant des polygones dont l'ordre d'affichage est hors de propos ; sinon,
d. vérifier que le premier polygone est entièrement situé d'un côté du plan du deuxième polygone, si tel est le cas, déterminer l'ordre d'affichage desdits deux polygones ; sinon,
e. vérifier que le deuxième polygone est entièrement situé d'un côté du plan du premier polygone, si tel est le cas, déterminer l'ordre d'affichage desdits deux polygones ; sinon,
f. vérifier s'il existe un plan de séparation entre lesdits deux polygones, si tel est le cas, déterminer l'ordre d'affichage desdits deux polygones ; sinon,
g. diviser les polygones selon les besoins ;
h. répéter les étapes (a) à (g) avec les polygones ainsi divisés ; et
i. rechercher l'ordre correct de tous les polygones dans la scène en effectuant une recherche graphique sur tous les résultats des étapes (a) à (h) de toutes les paires possibles de polygones, tout en divisant les polygones selon les besoins,
lesquelles étapes (a) à (h) sont répétées pour chaque paire de polygones dans chaque orientation.

6. Procédé selon la revendication 1, dans lequel l'analyse de visibilité est effectuée pour au moins deux polygones convexes conformément aux étapes suivantes consistant à :
a. vérifier que les axes x desdits deux polygones convexes ne se chevauchent pas, si tel est le cas, marquer lesdits deux polygones comme étant des polygones dont l'ordre d'affichage est hors de propos ; sinon,
b. vérifier que les axes y desdits deux polygones convexes ne se chevauchent pas, si tel est le cas, marquer lesdits deux polygones convexes comme étant des polygones dont l'ordre d'affichage est hors de propos ; sinon,
c. vérifier que les projections des deux polygones convexes sur le plan de vue ne se chevauchent pas, si tel est le cas, marquer lesdits deux polygones convexes comme étant des polygones dont l'ordre d'affichage est hors de propos ; sinon,
d. vérifier que le premier polygone convexe est entièrement situé d'un côté du plan du deuxième polygone convexe, si tel est le cas, déterminer l'ordre d'affichage desdits deux polygones convexes ; sinon,
e. vérifier que le deuxième polygone convexe est entièrement situé d'un côté du plan du premier polygone convexe, si tel est le cas, déterminer l'ordre d'affichage desdits deux polygones convexes ; sinon,
f. rechercher un plan de séparation entre lesdits deux polygones convexes et déterminer l'ordre d'affichage desdits deux polygones convexes ;
g. rechercher l'ordre correct de tous les polygones convexes dans la scène en effectuant une recherche graphique sur tous les résultats des étapes (a) à (f) de toutes les paires possibles de polygones convexes, tout en divisant les polygones convexes selon les besoins,
lesquelles étapes (a) à (f) sont répétées pour chaque paire de polygones convexes dans chaque orientation.

7. Procédé selon la revendication 5, dans lequel l'existence d'un plan de séparation est vérifiée conformément aux étapes suivantes consistant à :
a. définir le plan L comme étant un plan passant par le bord *eᵢ* et le (sommet)ⱼ, lesquels bords *eᵢ* sont les bords reliant le (sommet)ᵢ et le (sommet)*ᵢ₊ₗ* du premier polygone et le (sommet)ⱼ est un sommet du deuxième polygone ;
b. vérifier que ledit premier polygone est situé d'un côté du plan L et que ledit deuxième polygone est situé de l'autre côté du plan L et ce, tant que le résultat est négatif ;
c. répéter l'étape (b) pour toutes les combinaisons entre les bords *eᵢ* et les sommets (sommet)ⱼ jusqu'à ce qu'un plan de séparation soit trouvé ; sinon,
d. définir un plan L comme étant un plan passant par le bord *eⱼ* et le (sommet)ᵢ, lesquels bords *eⱼ* sont les bords reliant le (sommet)*ⱼ* et le (sommet)*ⱼ₊₁* dudit deuxième polygone et le (sommet)ᵢ est un sommet dudit premier polygone ;
e. vérifier que ledit premier polygone est situé d'un côté du plan L et que ledit deuxième polygone est situé de l'autre côté du plan L et ce, tant que le résultat est négatif ;
f. répéter l'étape (e) pour toutes les combinaisons entre les bords *eⱼ* et les sommets (sommet)*ᵢ* jusqu'à ce qu'un plan de séparation soit trouvé ou jusqu'à ce que toutes les combinaisons aient été vérifiées.

8. Procédé selon la revendication 3, comprenant les étapes consistant à :
a. pour toutes les *n* vues différentes souhaitées, générer *n* listes numérotées {Ti _{|*i =1*, ...,*n*}} de sous-ensembles du réseau de polygones représentant chaque vue ;
b. générer un graphique à clic constitué de *n* noeuds (N*i*) étant lesdites *n* listes numérotées T*i* et de bords E*ij* reliant le noeud *i* au noeud *j* _{|*j = 1,.*..,} *ₙ* ;
c. pour chaque bord E*ij* dans ledit graphique à clic, attribuer une pondération qui correspond au coût de la différence entre n'importe quel ensemble de deux noeuds N*i* et N*j* ;
d. générer l'arbre recouvrant minimum (« *Minimum Spanning Tree* ») (MST) dudit graphique à clic ;
e. représenter toutes lesdites listes numérotées {T*i*} par une liste d'ordre sélectionné T*k*, étant la racine dudit MST, et par tous les bords sélectionnés ayant la plus faible pondération, faisant partie dudit MST, et allant de T*k* à toutes les listes numérotées restantes ; et
f. coder ladite T*k* et toutes les transitions représentées par lesdits bords sélectionnés dans un fichier de données, à partir duquel toutes les *n* listes numérotées T*i* peuvent être reconstruites.
